# EUROPÄISCHE PATENTSCHRIFT

(11) **EP 1 448 287 B1**
(45) Veröffentlichungstag und Bekanntmachung des Hinweises auf die Patenterteilung: **07.01.2015**
(21) Anmeldenummer: 02791740.0
(22) Anmeldetag: 29.11.2002
(51) Int. Cl.: B01D 29/15

(54) **FILTER ZUR VERWENDUNG IN LACKSPRÜHDOSEN**
FILTER FOR USING IN AEROSOL PAINT CANS
FILTRE DESTINE A ETRE UTILISE DANS DES BOMBES AEROSOL DE PEINTURE

(30) Priorität: 29.11.2001 DE 10158431
(43) Veröffentlichungstag der Anmeldung: 25.08.2004
(73) Patentinhaber: Peter Kwasny GmbH, 74831 Gundelsheim (DE)
(72) Erfinder: KWASNY, Peter, CH-8200 Schaffhausen (CH)
(74) Vertreter: Thiel, Christian
(86) Internationale Anmeldenummer: PCT/EP2002/013498
(87) Internationale Veröffentlichungsnummer: WO 2003/045531

(56) Entgegenhaltungen:
- EP-A2- 0 852 210
- US-A- 5 018 643
- US-A- 5 567 323
- US-A- 5 842 639
- US-A1- 2001 023 846

## Beschreibung

Die Erfindung betrifft eine unter Druck stehende Lacksprühdose mit einem Ventil, in der ein Filterkörper über einen Adapter und ein Steigrohr mit dem Ventil verbunden ist.

Sprühdosen werden seit langem für verschiedene Anwendungszwecke und verschiedene Materialien eingesetzt und in großen Stückzahlen für den Haushalt, den Heimwerkerbereich sowie auch für professionelle Anwendungszwecke vertrieben. Einen erheblichen Anteil daran haben Lacksprühdosen, die sich zunehmend im Haushalt und Heimwerkerbereich durchsetzen und vor allem im Autoreparaturbereich seit langem eingeführt sind.

Autoreparaturlacke werden als Einkomponentenlacke und Zweikomponentenlacke in Druck-Sprühdosen vertrieben. Bei Zweikomponentenlacken wird die Lackzubereitung unmittelbar vor der Anwendung mit einer Härterkomponente vermischt, die eine mehr oder weniger rasche Aushärtung des aufgetragenen Lackes auf der Oberfläche durch Vernetzung bewirkt. Die Härterkomponente ist in der Lacksprühdose in einer zweiten Kammer (Innen- bzw. Vernetzerhülse) untergebracht, die durch Einwirkung von außen, zumeist über eine im Dosenboden angeordnete Stößelvorrichtung; geöffnet werden kann, so dass der Inhalt in die Lackkomponente austreten kann. Nach gründlicher Durchmischung findet die Aushärtung über eine chemische Reaktion statt. Bekannt sind beispielsweise Epoxilacke, die mit einem Polyamin vernetzt werden, und Lacke mit freien Hydroxifunktionen, die über Polyisocyanate vernetzt werden. Diese Vernetzungsreaktionen sind an und für sich bekannt und vielfach in der Literatur beschrieben.

Ein Problem bei der Ausbringung von Lacken ist, insbesondere bei Dosen, die über längere Zeit gelagert wurden, die Bildung von Partikeln, die bei der Ausbringung zu einem unsauberen Erscheinungsbild der lackierten Fläche führen. Größere Partikel sind unter Umständen geeignet, den Ventilmechanismus zu blockieren. Solche Probleme treten insbesondere auch immer wieder bei Zweikomponentenlacksprühdosen auf, bei denen, in Folge der Anordnung der Vernetzerkomponente in der Innenhülse und des Druckausgleiches zwischen Vernetzerhülse und Doseninnenraum nach der Befüllung, es zu Ablagerungen im Dichtungsbereich der Innenhülse kommt, die auf der Reaktion von geringen Mengen Vernetzer mit der Lackkomponente beruhen. Diese Ablagerungen können sich bei der Öffnung der Innenhülse, die in der Regel durch Absprengen eines Deckels durch den durch den Dosenboden hindurchgeführten Stößel bewirkt wird, lösen und in der Folge in das Sprühventil und/oder den ausgebrauchten Lack gelangen. Ersteres führt zu Unregelmäßigkeiten im Lacksprühstrahl bei der Ausbringung oder zur Verstopfung des Ventils, letzteres zu einer unsauber lackierten Oberfläche.

Es besteht deshalb ein Bedarf an einer Rückhaltevorrichtung für unerwünschte Partikel in Lacksprühdosen.

Bei der Gestaltung einer geeigneten Rückhaltevorrichtung ist allerdings zu beachten, dass die Ausbringrate, d. h. die auf die Zeit bezogene Menge beispielsweise eines Zweikomponentenlackes, nicht unzuträglich eingeschränkt werden darf. Die Rückhaltevorrichtung muß deshalb für die Lackkomponente hinreichend durchlässig sein und eine solch große Oberfläche aufweisen, dass auch bei teilweiser Belegung der Oberfläche mit zurückgehaltenen Partikeln noch Lack in hinreichender Menge ausgebracht werden kann. Die Rückhaltevorrichtung muß bei den in Druckdosen üblichen Drücken von bis zu 12 bar funktionsfähig bleiben und gegenüber den in der Druckdose befindlichen Lösemitteln, Farbkomponenten und Reaktivvernetzem inert sein. Gefordert ist also eine hinreichend große Oberfläche der Rückhaltevorrichtung bei für den genannten Zweck geeigneter Durchlässigkeit bzw. Porengröße; die für die Lack-

US-A-5,842,639 und US-A-5,567,323 beschreiben Lacksprühsysteme, bei denen über einen in einen Lackvorratsbehälter eintauchbares Ansaugrohr durch ein Filterelement hindurch Lack angesaugt werden kann. Die Filterelemente bestehen aus mit Perforationen versehenen Formteilen, die mit dem Ansaugrohr in einen Vorratsbehälter eingetaucht werden und der Rückhaltung von unerwünschten Fremdteilen und Verklumpungen dienen. Die Ausbringung des Lacks erfolgt vorzugsweise über Airless-Spritzpistolen.

US 2001/023846 A1 betrifft eine Filterkerze aus einem zylinderförmigen Drahtgeflecht, das aus kreisförmig angeordneten, senkrechten Drahtstäben und waagerecht parallel angeordneten Halteringen besteht und die als Tauchfilter zur Filtrierung von beliebigen Flüssigkeiten verwandt werden kann. Als Einsatzfelder werden die Gartenbewässerung und Brennstofftanks genannt.

Diese Aufgabe wird mit einer Lacksprühdose der eingangs genannten Art gelöst, bei der der Filterkörper aus einem Sinterwerkstoff besteht und eine Durchlässigkeit im Bereich von 20 bis 250 µm aufweist, insbesondere im Bereich von 40 bis 200 µm und ganz bevorzugt im Bereich von 60 bis 100 µm, Bei Durchlässigkeiten von weniger als 20 µm ist ein hinreichender Durchtritt des zu filtrierenden Materials nicht mehr gewährleistet. Bei Durchlässigkeiten von mehr als 250 µm, insbesondere mehr als 200 µm werden Verkrustungen und Ablagerungen nicht mehr zuverlässig zurückgehalten, sondern können in den Filterkörper gelangen und dort oder im Ventil zur Verstopfung führen. Insbesondere bei ausgebrachten Lacken führen Partikel dieser Größenordnung zu einem unsauberen Erscheinungsbild. Besonders bevorzugt ist eine Durchlässigkeit im Bereich von 60 bis 100 µm, weil hier sowohl eine hinreichende Durchlässigkeit des Filters für Lackmaterial gegeben ist als auch Partikel einer störenden Größenordnung zurückgehalten werden.

Erfindungsgemäß ist der Körper des Filters das Filterelement und besteht aus einem Sinterwerkstoff. Insbesondere kommen Sinterkunststoffe in Frage, wie sie beispielsweise aus Polyalkylenen mit sehr hohem Molekulargewicht gefertigt werden können. Bevorzugtes Material ist ein Polyethylen mit ultrahohem Molekulargewicht (Poroplast) und einer spezifischen Dichte von 0,92 bis 0,95 g/cm³, wobei das mittlere Molekulargewicht (Gewichtsmittel) im Bereich von 3 Mio. bis 6 Mio. g/mol liegt. Derartige Filterelemente bzw. Filterkerzen werden aus Kunststoffgranulat bzw. -pulver durch "sintern" bei Temperaturen im Bereich von etwa 200°C gefertigt. Die Filtriereigenschaften ergeben sich dabei aus der Korngröße des Rohstoffes, der Schichtdicke der Filterschicht, der Verarbeitungstemperatur und der Verarbeitungsdauer. Die Technik und Parameter sind dem Fachmann an und für sich bekannt bzw. können von ihm durch einfache Versuche ermittelt werden.

Der Vorteil einer solchen Filterkerze ist, dass die gesamte Oberfläche für den Filtriervorgang zur Verfügung steht und sich das filtrierte Material in einem Schacht im Innern der Filterkerze vor der Ausbringung sammelt. Auf diese Art und Weise steht in Lacksprühdosen im Bereich des Steigrohres stets genügend Lack zur Ausbringung an, wobei der im Innern der Dose befindliche Druck von in der Regel mindestens 3,5 bar sowohl zur Filtrierung als auch zur Ausbringung des Lackes genutzt wird.

Der erfindungsgemäße Filterkörper weist einen Adapter zum Anschluß des Steigrohres auf. Dabei kann der Adapter Teil des Filterelementes selbst sein oder ein zweites Teil darstellen, dass mit dem Filterelement verbunden ist. Zweckmäßigerweise weist der Adapter eine Schlauchtülle auf, die mit einer Dichtrippe versehen ist, so dass das zum Ventil der Druckdose führende Steigrohr sicher und dicht gehalten wird. Sofern der Adapter nicht integraler Teil des Filters selbst ist, ist er mit dem Filterelement über eine Steg- oder Rastverbindung verbunden, beispielsweise dergestalt, dass der Filterkörper bzw. das Filterelement eine ringförmige Eintiefung aufweist, in die der Adapter mit einem entsprechend gestalteten Vorsprung einrastet. Besonders bevorzugt ist hierzu ein konischer Verlauf des Vorsprunges des Adapters wie auch der Eintiefung im Filterkörper bzw. Filterelement.

Der Adapter ist zweckmäßigerweise aus einem thermoplastischen Kunststoff gefertigt, beispielsweise einem Polyamid oder Polyethylen.

Die so gestalteten Filterkörper haben sich als besonders geeignet für Zweikomponentenlacksprühdosen erwiesen, wobei sie über ein Steigrohr mit der Ventileinrichtung der Dose verbunden sind. Derartige Dosen weisen eine auslösbare Innenhülse in der Regel im Bodenbereich auf, wie eingangs beschrieben, wobei die Hülse die Vernetzerkomponente enthält, beispielsweise ein Polyamin oder Polyisocyanat, gegebenenfalls zusammen mit einem Katalysator. Insbesondere bei der Verwendung von Polyisocyanaten als Vernetzer kommt es immer wieder über die Lagerzeit zur Ausbildung von Verkrustungen, die aus dem auszubringenden Lack ferngehalten werden müssen.

Die Erfindung wird durch die beiliegenden Abbildungen näher erläutert. Es zeigen:
- Figur 1: ein Filterelement aus einem Sinterkunststoff und
- Figur 2: eine Ausführungsform eines erfindungsgemäßen Filters is mit dem Filterelement gemäß Figur 1 und einem Adapter mit angeschlossenem Steigrohr.

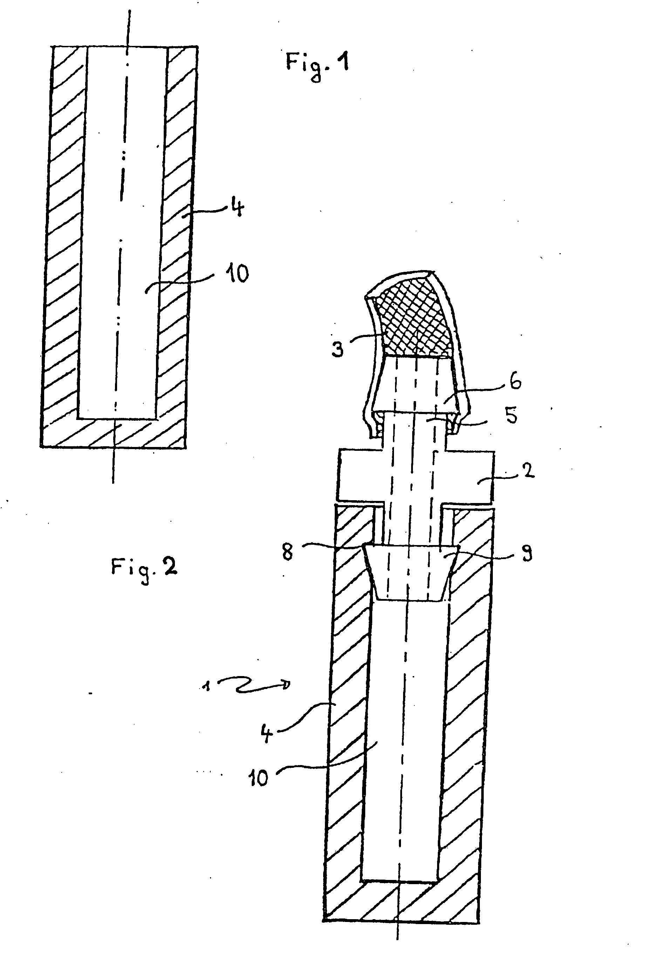

Figur 1 zeigt ein Filterelement 4 gemäß einer bevorzugten Ausführungsform der Erfindung. Das Filterelement besteht aus einem gesinterten Polyethylen mit einem mittleren Molekulargewicht im Bereich von 3 Mio. bis 6 Mio., das nach Sinterung bei etwa 200°C eine Durchlässigkeit von 80 µm aufweist. Das Filterelement selbst hat beispielsweise eine Länge von insgesamt 27 mm, einen äußeren Durchmesser von 9 mm und eine Wandstärke von 2 mm. Die Filterwirkung erstreckt sich über die gesamte Außenfläche. Der Innenraum 10 füllt sich mit filtriertern Lack, der über ein Steigrohr und Ventil aus einer Druckdose ausgebracht werden kann. Am oberen offenen Ende wird, wie in Figur 3 gezeigt, der Adapter für das Steigrohr eingebracht.

Figur 2 zeigt einen erfindungsgemäßen Filter mit dem Filterelement von Figur 1 mit eingebrachtem Adapter 2. Filterkörper 1 und Filterelement 4 bilden hier eine Einheit, der Adapter 2 ist vom Filterkörper selbst getrennt und weist eine Schlauchtülle 5 mit einer konisch zulaufenden Dichtrippe 6 auf, über die der Schlauch des Steigrohres 3 gezogen ist. Am filterseitigen Ende weist der Adapter 2 einen weiteren zum Ende hin konisch zulaufenden Vorsprung bzw. eine Dichtrippe 9 auf, die mit einer entsprechend ausgebildeten Hinterschneidung 8 des Filterelementes 4 nach Art einer Steck- oder Rastverbindung zusammenwirkt und den Adapter 2 fest mit dem Filterelement 4 verbindet.

Unter Durchlässigkeit wird erfindungsgemäß verstanden, dass Teilchen eines größeren Durchmessers zuverlässig zurückgehalten werden, beispielsweise bei einer Durchlässigkeit von 100 µm alle Teilchen mit einer Partikelgröße von mehr als 100 µm.

## Patentansprüche

1. Lack enthaltende Sprühdruckdose mit einem Ventil und einem Filter, der aus einem Filterelement (4) und einem Körper (1) besteht, wobei der Körper (1) über einen Adapter (2) und ein Steigrohr (3) mit dem Ventil verbunden ist, aus einem Sinterwerkstoff besteht und eine Durchlässigkeit im Bereich von im Bereich von 20 bis 250 µm aufweist, **dadurch gekennzeichnet, dass** der Körper (1) zugleich das Filterelement (4) ist und als Filterkerze ausgebildet ist.

2. Druckdose nach Anspruch 1, **dadurch gekennzeichnet, dass** der Sinterwerkstoff ein Sinterkunststoff ist.

3. Druckdose nach Anspruch 2, **dadurch gekennzeichnet, dass** der Sinterkunststoff ein Polyethylen mit ultrahohem Molekulargewicht ist.

4. Druckdose nach einem der Ansprüche 1 bis 3, **gekennzeichnet durch** eine Durchlässigkeit im Bereich von 40 bis 200 µm.

5. Druckdose nach Anspruch 4, **gekennzeichnet durch** eine Durchlässigkeit im Bereich von 60 bis 100 µm

6. Druckdose nach einem der vorstehenden Ansprüche, **dadurch gekennzeichnet, dass** der Adapter (2) eine Schlauchtülle (5) mit einer Dichtrippe (6) aufweist.

7. Druckdose nach Anspruch 6, **dadurch gekennzeichnet, dass** der Adapter (2) über eine Steckverbindung (7) mit dem Körper (1) verbunden ist.

8. Druckdose nach Anspruch 7, **dadurch gekennzeichnet, dass** der Körper (1) eine ringförmige Hinterschrieidung (8) aufweist, die mit einem entsprechenden Vorsprung (9) des Adapters (2) zusammenwirkt.

9. Druckdose nach Anspruch 8, **dadurch gekennzeichnet, dass** der Vorsprung (9) des Adapters (2) konisch zuläuft und mit einer entsprechend geformten Eintiefung (8) im Innenraum (10) des Filterkörpers (1) zusammenwirkt.

10. Druckdose für Zwei Komponentenlacke nach einem der Ansprüche 1 bis 9, **gekennzeichnet durch** eine von außen auslösbare Innenhülse im Bodenbereich der Dose, wobei die Innenhülse eine Vernetzkomponente enthält.

11. Druckdose nach Anspruch 10, **dadurch gekennzeichnet, dass** die Innenhülse ein Polyamin oder ein Polyisocyanat enthält.

## Claims

1. Point containing pressurized aerosol can having a valve and a filter consisting of a filter element (4) and a body (1), the body (1) being connected, via an adapter (2) and an ascending pipe (3) with the valve, consisting of a sintered material and having a permeability ranging between 20 and 250 µm **characterized in that** the body (1) at the same time is the filter element (4) and constitutes a filter candle.

2. The pressurized can according to claim 1, **characterized in that** the sintered material is a sintered plastic material.

3. The pressurized can according to claim 2, **characterized in that** the sintered plastic material is a polyethylene having an ultra-high molecular weight.

4. The pressurized can according to any one of the claims 1 to 3, **characterized by** permeability in the range from 40 to 200 µm.

5. The pressurized can according to claim 4, **characterized by** permeability ranging between 60 and 100 µm.

6. The pressurized can according to any one of the above claims, **characterized in that** the adapter (2) is provided with a hose connection nipple (5) having a sealing rib (6).

7. The pressurized can according to claim 6, **characterized in that** the adapter (2) is connected to the body (1) by means of a plug-type connection (7).

8. The pressurized can according to claim 7, **characterized in that** in body (1) a annular undercut recess (8) is formed out that engages with a correspondingly shaped projection (9) of the adapter (2).

9. The pressurized can according to claim 8, **characterized in that** the projection (9) of the adapter (2) is conically shaped and engages with a correspondingly formed out recess (8) arranged in the interior space (10) of the filter body (1).

10. Pressurized can for two-component paintmaterial in accordance with any one of the claims 1 to 9, **characterized by** an inner casing that can be forced open from the outside and is located in the bottom section of the can, the inner casing containing a cross-linking component.

11. The pressurized can according to claim 10, **characterized in that** the inner casing contains a polyamine or polyisocyanate.

## Revendications

1. Distributeur aérosol sous pression contenant un vernis, muni d'une soupape et d'un filtre, qui est constitué d'un élément de filtration (4) et d'un corps (1), le corps (1) étant raccordé à la soupape par un adaptateur (2) et une colonne montante (3), étant constitué d'un matériau fritté et présentant une perméabilité dans la plage allant de 20 à 250 µm, **caractérisé en ce que** le corps (1) est simultanément l'élément de filtration (4) et est configuré sous la forme d'une cartouche de filtration.

2. Distributeur sous pression selon la revendication 1, **caractérisé en ce que** le matériau fritté est un plastique fritté.

3. Distributeur sous pression selon la revendication 2, **caractérisé en ce que** le plastique fritté est un polyéthylène de poids moléculaire ultra-élevé.

4. Distributeur sous pression selon l'une quelconque des revendications 1 à 3, **caractérisé par** une perméabilité dans la plage allant de 40 à 200 µm.

5. Distributeur sous pression selon la revendication 4, **caractérisé par** une perméabilité dans la plage allant de 60 à 100 µm.

6. Distributeur sous pression selon l'une quelconque des revendications précédentes, **caractérisé en ce que** l'adaptateur (2) comprend un raccord d'extrémité (5) muni d'une nervure étanche (6).

7. Distributeur sous pression selon la revendication 6, **caractérisé en ce que** l'adaptateur (2) est raccordé avec le corps (1) par une connexion par fiche (7).

8. Distributeur sous pression selon la revendication 7, **caractérisé en ce que** le corps (1) comprend une contre-dépouille annulaire (8), qui interagit avec une saillie (9) correspondante de l'adaptateur (2).

9. Distributeur sous pression selon la revendication 8, caractérisé la saillie (9) de l'adaptateur (2) se termine coniquement et interagit avec un retrait (8) de forme correspondante dans l'espace intérieur (10) du corps du filtre (1).

10. Distributeur sous pression pour vernis bicomposant selon l'une quelconque des revendications 1 à 9, **caractérisé par** une gaine interne pouvant être ouverte depuis l'extérieur dans la zone de fond du distributeur, la gaine interne contenant un composant de réticulation.

11. Distributeur sous pression selon la revendication 10, **caractérisé en ce que** la gaine interne contient une polyamine ou un polyisocyanate.
